(19) Europäisches Patentamt
European Patent Office
Office européen des brevets

(11) EP 0 507 561 B1

(12) **EUROPEAN PATENT SPECIFICATION**

(45) Date of publication and mention of the grant of the patent:
**26.06.1996 Bulletin 1996/26**

(51) Int Cl.[6]: **C08G 81/02**, C08L 23/10

(21) Application number: **92302853.4**

(22) Date of filing: **01.04.1992**

# (54) Thermoplastic resin compositions

Thermoplastische Harzzusammensetzung

Composition de résines thermoplastiques

(84) Designated Contracting States:
**DE FR GB IT**

(30) Priority: **04.04.1991 JP 71836/91**

(43) Date of publication of application:
**07.10.1992 Bulletin 1992/41**

(73) Proprietor: **NOF CORPORATION**
**Tokyo (JP)**

(72) Inventors:
- **Sugiura, Motoyuki**
**Aichi-ken 470-23 (JP)**
- **Ohara, Kazumine**
**Chita-gun, Aichi-ken 470-23 (JP)**

(74) Representative: **Browne, Robin Forsythe, Dr.**
**Urquhart-Dykes & Lord**
**Tower House**
**Merrion Way**
**Leeds LS2 8PA West Yorkshire (GB)**

(56) References cited:
**EP-A- 0 277 608**
**EP-A- 0 412 787**
**DE-A- 1 595 517**

- **WORLD PATENTS INDEX LATEST Derwent Publications Ltd., London, GB; AN 90-249778**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 507 561 B1

## Description

The present invention relates to a thermoplastic resin composition having improved characteristics such as impact resistance and coatability, and particularly to a resin composition to be used as a material for resin molded articles such as a bumper of an automobile.

Propylene polymerides are widely used for various molded products since they have excellent mechanical properties, processability during molding, chemical resistance and are inexpensive. However, the propylene polymerides have a drawback in that they have poor impact resistance, coatability (the concept including readiness of being coated, adhesion with a coating film, etc.) and adhesion with an adhesive or a film. For this reason, when the propylene polymeride is used as a bumper, a thermoplastic elastomer is added thereto so as to improve impact resistance and coatability (Japanese Unexamined Patent Publications Nos 63-39951 and 63-122752). When a bumper is coated, the surface of the bumper is washed with a halogen containing organic solvent such as 1,1,1-trichloroethane and trichloroethylene prior to application or a primer coating and a top coating.

Meanwhile, in order to overcome the above problems of propylene polymerides, an attempt was made to admix a vinyl type polymer, for example, polystyrene with a propylene polymer. Japanese Unexamined Patent Publication No 58-93730 discloses a technique of dispersing polystyrene in a propylene polymeride by blending a polystyrene modified propylene polymeride produced by a specific process with a propylene polymeride.

Japanese Unexamined Patent Publication No 2-173049 discloses a technique of blending a multi-phase structure graft copolymer having an olefin copolymer portion and a vinyl copolymer portion with a propylene polymeride.

Nowadays, the surface washing process using a halogen containing organic solvent is desirably omitted in order to prevent environmental pollution. The molded products of a composition disclosed in Japanese Unexamined Patent Publication No 63-39951, however, involves a problem that adhesion of the molded product with a primer is extremely reduced unless the surface of the molded product is washed.

Since the propylene polymeride and polystyrene generally have poor compatibility with each other, only a small amount of polystyrene can be blended with the propylene polymeride. The molded product of such a blend, therefore, still involves a problem because it has low impact resistance. Further, when the technique disclosed in Japanese Unexamined Patent Publication No 58-93730 is employed, the compatibility of the polystyrene modified propylene polymeride with the propylene polymeride was not always sufficient because the graft efficiency of the polystyrene modified propylene polymeride is low.

The compatibility of the multi-phase structure graft copolymer with the propylene polymeride is improved in the technique disclosed in Japanese Unexamined Patent Publication No 2-173049. Since polymers constitution the multi-phase structure graft copolymer have poor affinity with a coating, the resulting composition still has insufficient performance with respect to coatability (particularly adhesion with the coating film).

Preferred embodiments of the present invention provide a thermoplastic resin composition having excellent impact resistance, coatability and adhesion while maintaining excellent mechanical properties of propylene resins.

The present invention provides a thermoplastic resin composition which comprises a crystallisable propylene polymeride, and a graft copolymer having an olefin homo/copolymer portion and a vinyl copolymer portion, characterized in that:

(a) the olefin homo/co-polymer portion constitutes from 5 to 95% by weight of the graft copolymer, the vinyl copolymer portion constituting the remainder of the graft copolymer,

(b) the vinyl copolymer portion is a copolymer of a vinyl monomer with an unsaturated monomer having a functional group selected from the an epoxy group, a carboxyl group, a hydroxyl group and in amino group, and

(c) one of the olefin homo-co-polymer portion and the vinyl copolymer portion forms a dispersed phase in the other with a particle size of 0.001 to 10 μm.

The vinyl copolymer portion of the graft copolymer (2) has at least one functional group selected from an epoxy group, a carboxyl group, a hydroxyl group and an amino group. One of the olefin homo/co-polymer portion and the vinyl copolymer portion form a dispersed phase in the other with a particle size of 0.001 to 10 μm. Consequently, the graft copolymer assumes a multi-phase structure.

Since the graft copolymer (2) includes an olefin homo/copolymer portion, compatibility between the graft copolymer (2) and the propylene polymer (1) can be improved. As the result, the graft copolymer (2) can homogenously be dispersed in a large amount in the propylene polymer (1).

If the proportion of the vinyl copolymer is increased in the thermoplastic resin composition, the characteristics of the olefin homo/co-polymer and the vinyl copolymer can be exhibited with good balance. In addition, since the vinyl copolymer portion contains at least one functional group selected from an epoxy group, a carboxyl group , a hydroxyl

group and an amino group, affinity of the resin composition with a coating, and thus, the coatability of the molded prcducts (particularly adhesion with the coating film) can be improved over the prior art molded products.

The constituents of the present invention will be described below in more detail.

Propylene polymeride (1)

The propylene polymeride (1) used in the present invention preferably should have crystallisability. Suitable propylene polymerides include, for example, a propylene homopolymer and a copolymer of propylene with other α-olefins or ethylenically unsaturated polar monomers. It is preferred that propylene is contained in the homo/co-polymer in an amount of 75% by weight or more.

The propylene polymeride (1) can be exemplified by isotactic polypropylene, a crystalline propylene-ethylene random copolymer, a crystalline propylene-ethylene block copolymer, a crystalline propylene-butene-1 random copolymer and maleic anhydride modified polypropylene. These propylene polymerides can be used in admixture, and other polymers can be added thereto as long as the properties of the propylene polymeride are not impaired.

Multi-phase structure graft copolymer (2)

The graft copolymer (2) which may be considered to have a multi-phase structure used herein has an olefin homo/co-polymer portion (X) and a vinyl copolymer portion (Y). The graft copolymer (2) is thermoplastic. One portion may be homogeneously dispersed in the form of spheres in the matrix of the other portion.

The particle size of the dispersed copolymer portion is preferably in the range of 0.001 to 10 μm, more preferably 0.01 to 5 μm. If the particle size is less than 0.001 μm or exceeds 10 μm, dispersibility of the graft copolymer (2) when blended with the propylene polymeride (1) becomes poor. Such poor dispersibility will bring about deterioration in the appearance of the molded products, reduction in impact resistance or lack in the effect of improving coatability.

The average degree of polymerisation of the vinyl copolymer portion (Y) in the multi-phase structure graft copolymer (2) is preferably in the range of 5 to 10,000, more preferably 10 to 5,000. If the degree of polymerisation is less than 5, coatability of the molded products prepared by using the present thermoplastic resin composition will not be improved. On the other hand, if it exceeds 10,000, viscosity of the fused composition will be increased, resulting in the deterioration of molding properties and surface lustre of the molded products.

In the multi-phase structure graft copolymer (2), the proportion of the olefin homo/copolymer portion (X) is in the range of 5 to 95% by weight (preferably 20 to 90% by weight), and the vinyl copolymer portion (Y) occupies the remaining weight. In other words, the proportion of the vinyl copolymer portion (Y) is in the range of 95 to 5% by weight (preferably 80 to 10% by weight). If the olefin homo/copolymer (X) is less than 5% by weight, compatibility of the graft copolymer (2) with the propylene copolymer (1) will be insufficient. On the other hand, if the olefin homo/copolymer portion (X) exceeds 95% by weight, coatability and adhesion of the molded product obtained by using the present thermoplastic resin composition will not be improved.

Olefin homo/copolymer (X)

The olefin homo/copolymer (X) constituting a part of the multi-phase structure graft copolymer (2) can be exemplified by homopolymers (X1) such as a low density, intermediate density or high density polyethylene, polypropylenes, polybutene-1, poly-4-methylpentene-1, ethylene copolymers (X2) and α-olefin copolymers (X3) such as propylene copolymers.

Ethylene copolymer (X2)

The ethylene copolymer (X2) refers to at least one copolymer selected from an ethylene-α-olefin copolymer (X21), a hydride (X22) of a block or random copolymer consisting essentially of an aromatic vinyl monomer and a conjugated diene monomer, an epoxy group containing ethylene copolymer (X23), a copolymer (X24) of ethylene-unsaturated carboxylic acid or alkyl ester thereof and a metal salt (X25) of such copclymer (X24), and an ethylene-vinyl ester copolymer (X26).

The ethylene-α-olefin copolymer (X21) as the ethylene copolymer (X2) refers to a polymer obtained by copolymerization of ethylene with at leat one α-olefin monomer and/or a nonconjugated diene monomer. The α-olefin monomer can be exemplified by unsaturated hydrocarbon compounds having 3 to 20 carbon atoms such as propylene, butene-1, pentene-1, hexene-1, heptene-1, 4-methylbutene-1, 4-methylpentene-1, decene-1, octene-1. Of them, propylene and butene-1 are most preferred as the α-olefin monomer. The nonconjugated diene monomer includes ethylidenenorbornene, 1,4-hexadiene, dicyclopentadiene.

The ethylene-α-olefin copolymer (X21) can be exemplified by ethylene-propylene copolymer, ethylene-butene-1

copolymer, ethylene-propylene copolymer rubber, ethylene-propylene-ethylidenonorbornene copolymer rubber, ethylene-propylene-1,4-hexadine copolymer rubber, ethylene-propylene-dicyclopentadiene copolymer rubber. Of these, an ethylene-propylene copolymer rubber having a Mooney viscosity ($ML_{1+4}$, 100°C) of 5 to 150 and an ethylene-propylene-diene copolymer rubber having a Mooney viscosity ($ML_{1+4}$, 100°C) of 15 to 120 and an iodine value of 4 to 30 are most preferred.

In the hydride (X22) of a block or random copolymer consisting essentially of a vinyl aromatic monomer and a conjugated diene monomer, as the ethylene copolymer (X2), the vinyl aromatic monomer can be exemplified by styrene, methylstyrene, dimethylstyrene, ethylstyrene, iospropylstyrene, chlorostyrene, $\alpha$-methylstyrene, $\alpha$-ethylstyrene, Of then, styrene is most preferred. The conjugated diene monomer includes 1,3-butadiene, 2-methyl-1,3-butadiene, 2,3-dimethyl-1,3-butadiene, 2-neopentyl-1,3-butadiene, 2-chloro-1,3-butadiene, 2-cyano-1,3-butadiene, linear conjugated pentadienes, linear and branched conjugated hexadienes. Of them, 1,3-butariiene and 2-methyl-1,3-butadiene can preferably be used, and 1,3-butadiene is most preferred.

A first type of the epoxy group containing ethylene copolymer (X23) as the ethylene copolymer (X2) includes a bipolymer of ethylene with a monomer containing both an unsaturated group and a glycidyl group (hereinafter referred to as unsaturated glycidyl group containing monomer) through high pressure radical polymerization, and a terpolymer or multi-polymer of ethylene with an unsaturated glycidyl group containing monomer and another unsaturated monomer. Of such copolymers, those containing 60 to 99.5% by weight of ethylene, 0.5 to 40% by weight of an unsaturated glycidyl group containing monomer and 0 to 39.5% by weight of another unsaturated monomer are preferred.

The unsaturated glycidyl group containing monomer includes glycidyl esters such as glycidyl acrylate, glycidyl methacrylate, monoglycidyl itaconate, monoglycidyl butenetricarboxylate, diglycidyl butenetriacarboxylate, triglycidyl butenetricarboxylate, glycidyl esters of $\alpha$-chloroallyl, maleic acid, crotonic acid, fumaric acid; glycidyl ethers such as vinylglycidyl ether, allylglycidyl ether, glycidyloxyethylvinyl ether, styrene-p-glycidyl ether, and p-glycidylstyrene. Of these, glycidyl methacrylate and allylglycidyl ether are particularly preferred.

Above mentioned another unsaturated monomer can be exemplified by at least one monomer selected from olefins, vinyl esters, $\alpha,\beta$-ethylenically unsaturated carboxylic acids and derivatives thereof, typically olefins such as propylene, butene-1, decene-1, octene-1 and sytrene; vinyl esters such as vinyl acetate, vinyl propionate and vinyl benzoate; acrylic acid, methacrylic acid and esters thereof such as methyl acrylate, methyl methacrylate (these two compounds are hereinafter referred to as "methyl (meth)acrylate"), ethyl (meth)acrylate, propyl (meth)acrylate, butyl (meth)acrylate, 2-ethylhexyl (meth)acrylate, cyclohexyl (meth)acrylate, 2-ethylhexyl(meth)acrylate, cyclohexyl (meth)acrylate, dodecyl (meth)acrylate and octadecyl (meth)acrylate; maleic acid, maleic anhydride, mono- or di-esters of maleic acid, itaconic acid and fumaric acid; vinyl esters such as vinyl chloride, vinyl methyl ether and vinyl ethyl ether; and acrylic acid amide compounds. Of these, esters of acrylic acid or methacrylic acid and vinyl esters are more preferred. The most preferred are methyl acrylate, ethyl acrylate, butyl acrylate, methyl methacrylate, ethyl methacrylate, butyl methacrylate and vinyl acetate.

The first type epoxy group containing ethylene copolymer (X23) includes ethylene-glycidyl methacrylate copolymer, ethylene-vinyl acetate-glycidyl methacrylate copolymer, ethylene-ethyl acrylate-glycidyl methacrylate copolymer, ethylene-carbon monoxide-glycidyl methacrylate copolymer, ethylene-glycidyl acrylate copolymer, ethylene-vinyl acetate-glycidyl acrylate copolymer, ethylene-ethyl acrylate-glycidyl acrylate copolymer. Of these, ethylene-glycidyl methacrylate copolymer, ethylene-vinyl acetate-glycidyl methacrylate copolymer and ethylene-ethyl acrylate-glycidyl methacrylate copolymer are preferred. The most preferred is ethylene-glycidyl methacrylate copolymer. These epoxy group containing ethylene copolymers may be used in combination.

Now, a process for preparing the first type epoxy group containing ethylene copolymer (X23) will be described.

For preparing the copolymer (X23), a high-pressure radical polymerization process is employed. To describe the process more specifically, ethylene (60.0 to 99.5% by weight), at least one kind of unsaturated glycidyl group containing monomer (0.5 to 40.0% by weight) and at least one kind of other ethylenically unsaturated monomer (0 to 39.5% by weight) are blended to prepare 100% by weight of a monomer mixture, and the resulting mixture is sealed in a reactor having a shape of tank or tube. Then, polymerization of the monomer mixture is carried out under the condition of a reaction pressure of 500 to 4000 kg /$cm^2$ (preferably 1000 to 3500 kg/$cm^2$) and a reaction temperature of 50 to 400°C (preferably 100 to 350°C) in the presence of 0.0001 to 1.0 % by weight of a radical polymerization initiator, a chain transfer agent, and, if necessary, other auxiliaries. The monomer mixture may be fed stepwise into the reactor as the reaction proceeds.

The radical polymerization initiator can be exemplified by peroxide, hydroperoxide, azo compounds, amineoxide compounds, oxygen.

The chain transfer agent includes hydrogen, propylene, butene-1, a saturated aliphatic hydrocarbon (preferably a $C_1$-$C_{30}$ hydrocarbon) such as methane, ethane, propane, butane, isobutane, n-hexane, n-heptane and cycloparaffin; a halogen substituted hydrocarbon such as chloroform and carbon tetrachloride; a saturated aliphatic alcohol (preferably $C_1$-$C_{20}$ alcohol) such as methanol, ethanol, propanol and isopropanol; a saturated aliphatic carbonyl compound (preferably $C_1$-$C_{20}$ carbonyl compound) such as carbon dioxide, acetone and methyl ethyl ketone; and an aromatic

hydrocarbon such as toluene, diethylbenzene and xylene.

A second type of the epoxy group containing ethylene copolymer (X23) is a modification of the conventional ethylene homopolymer or ethylene copolymer obtained by addition reaction with the unsaturated glycidyl group containing monomer. The ethylene homopolymer can be exemplified by low density, intermediate density and high density polyethylenes.

The ethylene copolymer can be exemplified by copolymers of ethylene with other α-olefin containing ethylene as the major component, such as ethylene-propylene copolymer, ethylene-butene-1 copolymer, ethylene-hexene-1 copolymer, ethylene-4-methylpentene-1 copolymer, ethylene-octene-1 copolymer; copolymers of propylene with ethylene and/or other α-olefin containing propylene as the major component, such as a propylene-ethylene block copolymer, ethylene-vinyl acetate copolymer, ethylene-acrylic acid copolymer, ethylene-methacrylic acid copolymer, copolymers of ethylene with acrylate or methacrylate, such as methyl-, ethyl-, propyl-, isopropyl- and butyl-(meth)acrylate; ethylene-maleic acid copolymer, ethylene-propylene copolymer rubber, ethylene-propylene-diene-copolymer rubber and ethylene-vinyl acetate-vinyl chloride copolymer.

The ethylene homopolymers and ethylene copolymers may be used in combination, or in admixture with different kinds of synthetic resins or rubbers.

The unsaturated carboxylic acids, alkyl esters and vinyl esters thereof constituting the copolymer (X24) of ethylene-unsaturated carboxylic acid or alkyl ester thereof, metal salt (X25) of such copolymer (X24) and ethylene-vinyl ester copolymer (X26), as the ethylene copolymer (X2), include those given below.

The unsaturated carboxylic acids can be exemplified by acrylic acid, methacrylic acid, maleic acid, fumaric acid, itaconic anhydride,. The unsaturated carboxylic acid alkyl ester monomer includes methyl (meth)acrylate, ethyl (meth) acrylate, propyl (meth)acrylate, butyl (meth)acrylate, cyclohexyl (meth)acrylate, lauryl (meth)acrylate, stearyl (meth) acrylate, monomethyl maleate, monoethyl maleate, diethyl maleate, diethyl fumarate.

The vinyl ester monomers can be exemplified by vinyl acetate, vinyl propionate, vinyl laurate, vinyl stearate, vinyl trifluoroacetate. Of these unsaturated carboxylic acids, alkyl esters and vinyl esters thereof, more preferred are acrylic acid, methacrylic acid, maleic anhydride, methyl acrylate, methyl methacrylate, ethyl acrylate and vinyl acetate. These monomers may be used in combination.

The metal salts (X25) of ethylene-unsaturated carboxylic acids copolymer or alkyl ester copolymer thereof are ion crosslinked ethylene copolymers obtained by addition reaction of copolymers (X24) of ethylene-unsaturated carboxylic acid or alkyl ester thereof with an unsaturated carboxylic acid monomer such as acrylic acid, maleic acid and maleic anhydride, followed by reaction of the thus modified polymer with a metal compound having a valence of 1 to 3.

The metal compounds include nitrates, acetates, oxides, hydroxides, methoxides, ethoxides, carbonates and bicarbonates of metals selected from the group consisting of Na, K, Ca, Mg, Zn, Ba, Fe (divalent or trivalent), Co, Ni and Al. Of them, Na, Mg and Zn metal compounds are particularly preferred. They may be used in combination, if necessary.

α-Olefin copolymer (X3)

The α-olefin copolymer (X3) constituting the olefin homo/co-polymer portion (X) of the multi-phase structure graft copolymer (2) is the one obtained by copolymerization of an α-olefin monomer such as propylene with at least one other α-olefin monomer or ethylene.

The α-olefin monomer refers to propylene and unsaturated hydrocarbon compounds having 4 to 20 carbon atoms. The α-olefin monomer can be exemplified by propylene, butene-1, pentene-1, hexene-1, heptene-1, 4-methylbutene-1, 4-methylpentene-1, decene-1, octene-1. Of these, propylene and butene-1 are most preferred.

Copolymer obtained by copolymerization of an α-olefin monomer such as propylene with at least one other α-olefin monomer or ethylene and other unsaturated monomers, such as the unsaturated glycidyl group containing monomer and the unsaturated carboxylic acid monomer, can be used as the α-olefin copolymer (X3). Further, the α-olefin copolymer (X3) may be modified through addition reaction with other unsaturated monomers such as the unsaturated glycidyl group containing monomer and the unsaturated carboxylic acid monomer.

Vinyl copolymer (Y)

The vinyl copolymer (Y) constituting a part of the multi-phase structure graft copolymer (2) refers to the copolymer of an unsaturated monomer having a functional group with a vinyl monomer. The functional group containing unsaturated monomer is contained in an amount of at least 0.01% by weight (preferably at least 0.05% by weight, more preferably at least 0.1% by weight) in the vinyl copolymer (Y).

The functional group containing unsaturated monomer may be introduced to the vinyl copolymer (Y) through copolymerization with a vinyl monomer, or through addition cis-1,4-dihydroxy-2-butene, trans-1,4-dihydroxy-2-butene, 2-hydroxyethyl (meth)acrylate, 2-hydroxypropyl (meth)acrylate, 3-hydroxypropyl (meth)acrylate, 2-hydroxyethyl crotonate, pentahydroxyethyl (meth)acrylate, 2,3,4,5-tetrahydroxypentyl (meth)acrylate

The amino group containing unsaturated monomer includes alkyl ester derivatives of acrylic acid or methacrylic acid such as aminoethyl acrylate, propylaminoethyl acrylate, dimethylaminoethyl methacrylate, aminopropyl methacrylate, phenylaminoethyl methacrylate and cyclohexylaminoethyl methacrylate; vinylamine derivatives such as N-vinyldiethylamine and N-acetylvinylamine; allylamine derivatives such as acrylamine, methacrylamine and N-methylallylamine; acrylamide derivatives such as acrylamide and N-methylacrylamide; and aminostyrenes such as p-aminostyrene.

Among the above four functional group containing unsaturated monomers, the hydroxyl group containing unsaturated monomer and the carboxyl group containing unsaturated monomer are most preferred in that it can improve coatability of the resulting composition without lowering impact resistance.

The vinyl monomer constituting the functional group containing vinyl copolymer (Y) includes aromatic vinyl monomers such as styrene, nucleus-substituted styrene (eg methylstyrene, dimethylstyrene, ethylstyrene, isopropylstyrene and chlorostyrene) and α-substituted styrene (eg α-methyl-styrene and α-ethylstyrene); ester monomers of (meth) acrylic acid and alkyl having 1 to 8 carbon atoms (eg methyl (meth)acrylate and ethyl (meth)acrylate), acrylonitrile, methacrylonitrile and vinyl ester monomers (eg vinyl acetate and vinyl propionate). In addition, other vinyl monomers such as vinyl halides (particularly vinyl chloride), vinylidene halides (particularly vinylidene chloride), vinyl naphthalene, vinyl carbazole, N-phenylmaleimide, N-cyclohexylmaleimide, can be used.

Process for preparing multi-phase structure graft copolymer (2)

When the multi-phase structure graft copolymer (2) is prepared, any of the two grafting techniques generally known, ie chain transfer method and ionization irradiation, may be employed. However, the most preferred one will be described below, which is advantageous in that it gives high graft efficiency and causes no agglomeration of the respective polymers (1) and (2) when the resin composition containing the polymers (1) and (2) is heated, and that this process is simple.

First, to 5 to 400 parts by weight of at least one vinyl monomer are added 0.1 to 100 parts by weight of a functional group containing unsaturated monomer per 100 parts by weight of the vinyl monomer and 0.1 to 20 parts by weight of a radically polymerizable organic peroxide represented by the following formula 1 or 2 per 100 parts by weight of the vinyl monomer. In the resulting mixture is dissolved 0.01 to 5 parts by weight of a polymerization initiator per 100 parts by weight of the mixture to prepare a solution. The polymerization initiator has a decomposition temperature of 40 to 90°C for achieving the half-value period of 10 hours.

Next, 100 parts by weight of an olefin homo/co-polymer (X) is preliminarily suspended in water, and the above solution is added to the suspension, followed by heating under a condition where the polymerization initiator does not substantially undergo decomposition. Thus, the olefin homo/co-polymer (X) is impregnated with the vinyl monomer, functional group containing unsaturated monomer, radically polymerizable organic peroxide and polymerization initiator.

Then, the temperature of the aqueous suspension is elevated to effect copolymerization of the vinyl monomer, the functional group containing unsaturated monomer and the radically polymerizable organic peroxide within the olefin homo/co-polymer (X), whereby a graft precursor containing the olefin homo/co-polymer (X) and the functional group containing vinyl copolymer (Y) can be obtained.

The graft precursor is kneaded in a molten state at a temperature of 100 to 300°C to give a multi-phase structure graft copolymer (2). During the melt kneading, another kind of olefin homo/co-polymer or vinyl copolymer may additionally be admixed to the graft precursor to prepare a multi-phase structure graft copolymer (2). In the suspension polymerization process, the multi-phase structure graft copolymer (2) may otherwise be obtained by carrying out the synthesis of the graft precursor without using the functional group containing unsaturated monomer, and adding it later to the resulting graft precursor, followed by melt kneading. Of the three processes, the first one wherein the graft precursor is simply melt blended is most preferred.

The thus obtained multi-phase structure graft copolymer (2) is melt kneaded with the propylene polymeride (1) to prepare a thermoplastic resin composition of the present invention. It should be noted that the graft precursor should not necessarily be subjected to melt kneading prior to blending with the propylene polymeride (1). In other words, the graft precursor can directly be mixed with the propylene polymeride (1) and the mixture is melt kneaded to carry out formation of the multi-phase structure graft copolymer and blending with the propylene polymeride at the same time.

By the way, the radically polymerizable organic peroxide is represented by the following chemical formula 1 or 2:

[Formula 1]

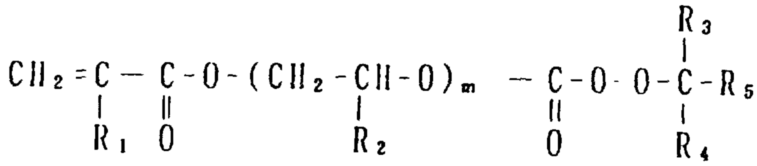

wherein $R_1$ represents a hydrogen atom or an alkyl group having 1 to 2 carbon atoms; $R_2$ represents a hydrogen atom or a methyl group; $R_3$ and $R_4$ each represent an alkyl group having 1 to 4 carbon atoms; $R_5$ represents an alkyl group having 1 to 12 carbon atoms, a phenyl group, an alkyl-substituted phenyl group or a cycloalkyl group having 3 to 12 carbon atoms; and m is 1 or 2.

[Formula 2]

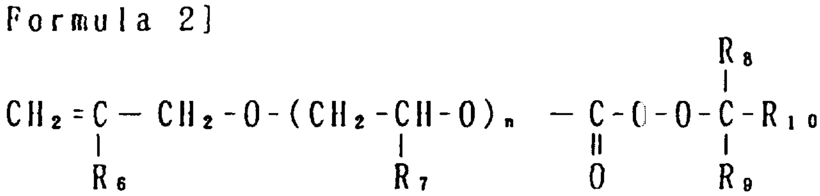

wherein $R_6$ represents a hydrogen atom or an alkyl group having 1 to 4 carbon atoms; $R_7$ represents a hydrogen atom or a methyl group; $R_8$ and $R_9$ each represent an alkyl group having 1 to 4 carbon atoms; $R_{10}$ represents an alkyl group having 1 to 12 carbon atoms, a phenyl group, an alkyl-substituted phenyl group or a cycloalkyl group having 3 to 12 carbon atoms; and n is 0, 1 or 2.

By way of example, suitable radically polymerizable organic peroxide represented by the formula 1 include

t-butylperoxyacryloyloxyethyl carbonate,
t-amylperoxyacryloyloxyethyl carbonate,
t-hexylperoxyacryloyloxyethyl carbonate,
1,1,3,3-tetramethylbutylperoxyacryloyloxyethyl carbonate,
cumylperoxyacryloyloxyethyl carbonate,
p-isopropylcumylperoxyacryloyoloxyethyl carbonate,
t-butylperoxymethacryloyloxyethyl carbonate,
t-amylperoxymethacryloyloxyethyl carbonate,
t-hexylperoxymethacryloyloxyethyl carbonate,
1,1,3,3-tetramethylbutylperoxymethacyloyloxyethyl carbonate, cumylperoxymethacryloyloxyethyl carbonate,
p-isopropylcumylperoxymethacryloyoloxyethyl carbonate,
t-butylperoxymethacryloyloxyethyl carbonate,
t-amylperoxyacryloyloxyethoxyethyl carbonate,
t-hexylperoxyacryloyloxyethoxyethyl carbonate,
1,1,3,3-tetramethylbutylperoxyacryloyloxyethoxyethyl carbonate, cumylperoxyacryloyloxyethyl carbonate,
p-isopropylperoxyacryloyloxyethoxyethyl carbonate,
t-butylperoxymethacryloyloxyethoxyethyl carbonate,
t-amylperoxymethacryloyloxyethoxyethyl carbonate,
t-hexylperoxymethacryloyloxyethoxyethyl carbonate,
1,1,3,3-tetramethylbutylperoxymethacryloyloxyethoxyethyl
carbonate, cumylperoxymethacryloyloxyethyl carbonate,
p-isopropylcumylperoxymethacryloyloxyethyl carbonate,
t-butylperoxyacryloyloxyisopropyl carbonate,
t-amylperoxyacryloyloxyisopropyl carbonate
t-hexylperoxyacryloyloxyisopropyl carbonate,
1,1,3,3-tetramethylbutylperoxyacryloyloxyisopropyl carbonate, cumylperoxyacryloyloxyisopropyl carbonate,
p-isopropylcumylperoxyacryloyloxyisopropyl carbonate,
t-butylperoxymethacryloyloxyisopropyl carbonate,
t-amylperoxymethacryloyloxyisopropyl carbonate, t-hexylperoxymethacryloyloxyisopropyl carbonate,
1,1,3,3-tetramethylbutylperoxymethacryloyloxyisopropyl carbonate, cumylperoxymethacryloyloxyisopropyl carbonate,
or p-isopropylcumylperoxymethacryloyloxyisopropyl carbonate.

The radically polymerizable organic peroxides represented by the formula 2 may take the form of t-butylperoxyallyl carbonate, t-amylperoxyallyl carbonate, t-hexylperoxyallyl carbonate, 1,1,3,3-tetramethylbutylperoxyallyl carbonate,

p-penthaneperoxyallyl carbonate, cumylperoxyallyl carbonate, t-butylperoxymethallyl carbonate, t-amylperoxymethallyl carbonate, t-hexylperoxymethallyl carbonate, 1,1,3,3-tetramethylbutylperoxymethallyl carbonate, p-pentaneperoxymethallyl carbonate,
cumylperoxymethallyl carbonate, t-butylperoxyallyloxyethyl carbonate, t-amylperoxyallyloxyethyl carbonate,
t-hexylperoxyallyloxyethyl carbonate,
t-butylperoxymethallyloxyethyl carbonate,
t-amylperoxymethallyloxyethyl carbonate,
t-hexylperoxymethallyloxyethyl carbonate,
t-butylperoxymethallyloxyisopropyl carbonate,
t-amylperoxyallyloxyisopropyl carbonate,
t-hexylperoxyallyloxyisopropyl carbonate,
t-butylperoxymethallyloxyisopropyl carbonate,
t-amylperoxymethallyloxyisopropyl carbonate, or
t-hexylperoxymethallyloxyisopropyl carbonate.

Of these radically polymerizable organic peroxides, t-butylperoxyacryloyloxyethyl carbonate,

t-butylperoxymethacryloyloxyethyl carbonate,
t-butylperoxyallylcarbonte and t-butylperoxymethallyl carbonate are more preferred. Two or more kinds of the radical polymerizable organic peroxides can be used in combination.

[Condition for processing thermoplastic resin compositions]

The present thermoplastic resin composition can be prepared by melt kneading the propylene polymeride (1) and the multi-phase structure graft copolymer (2).

The weight ratio of the propylene polymeride (1) to the graft copolymer (2) is 1 : 99 to 99 : 1 (more preferably 10 : 90 to 90 : 10, more preferably 20 : 80 to 80 : 20). If the amount of the graft copolymer (2) is less than 1 % by weight, coatability of the molded products of the thermoplastic resin composition cannot sufficiently be improved; whereas if it exceeds 99 % by weight, heat resistance of the molded product will be reduced.

Melt keading is preferably carried out at a temperature of 150 to 300°C. When the temperature is lower than 150°C, the polymer will be melted incompletely or its melt viscosity will be too high to carry out blending. Consequently, the resulting molded products of such resins will suffer phase separation, lamination peeling, etc. unfavorably. On the other hand, if the temperature exceeds 300°C, decomposition or gelation of the resins to be blended will occur, resulting in the failure of obtaining the desired thermoplastic resin composition.

Melt kneading of the raw material polymers can be carried out using an ordinary kneader such as a Banbury mixer, a kneader mixer, a kneader extruder, a twin screw extruder, a roller system or the like.

Second aspect of the invention of the thermoplastic resin composition

In the present invention, it is preferred to further blend a thermoplastic elastomer (3) with the resin composition consisting of the propylene polymeride (1) and the multi-phase structure graft copolymer (2). Addition of the thermoplastic elaster (3) further improves mechanical properties (eg impact resistance) of the thermoplastic resin composition according to the first aspect of t he present invention.

The thermoplastic elastomer (3) includes diene series rubbers such as polybutadiene, styrene-butadiene copolymer, acrylonitrile-butadiene copolymer and polyisoprene; non-diene series rubbers such as ethylene-α-olefin copolymer and ethylene-α-olefin-polyene copolymer; styrene-butadiene block copolymer, styrene hydride-butadiene block copolymer, styrene hydride-isoprene block copolymer, ethylene-propylene elastomer, styrene graft ethylene-propylene elastomer, ethylene type ionomer resins. Two or more kinds of these thermoplastic elastomer (3) can be used in combination.

Of the thermoplastic elastomer (3), ethylene-propylene copolymer rubber and ethylene-propylene-diene copolymer rubber are preferred in view of impact resistance, petrol resistance and the surface appearance of the molded products. Copolymer rubbers having a Mooney viscosity of 5 to 150 ($ML_{1+4}$100°C) are more preferred.

Meanwhile, in view of mechanical properties and heat resistance, the thermoplastic elastomer (3) is preferably added in an amount of 1 to 300 parts by weight, more preferably 1 to 200 parts by weight, and most preferably 1 to 100 parts by weight, per 100 parts by weight of the total amount of the propylene polymeride (1) and multi-phase

structure graft copolymer (2). If the thermoplastic elastomer (3) is added in an amount of less than 1 part by weight, flexibility of the resulting resin composition will be reduced, unfavorably. On the other hand, if it is added in an amount of more than 300 parts by weight, heat resistance of the resulting resin composition will be lowered.

Other components added to the present thermoplastic resin composition

An inorganic filler (4) may be added in an amount of not more than 200 parts by weight per 100 parts by weight of the total amount of the propylene polymeride (1) and multi-phase structure graft copolymer (2). If the inorganic filler (4) is added in an amount of more than 200 parts by weight, impact strength of the resulting molded product will be lowered.

The inorganic filler (4) may assume a variety of shapes including, for example, powder, flake, scale, needle, sphere, hollow body or fiber. Typical examples of inorganic filler (4) include powdery fillers such as barium sulfate, calcium silicate, clay, diatomaceous earth, talc, alumina, borax, glass powders, iron oxide, metal powders, graphite, silicon carbide, silicon nitride, silica, boron nitride, aluminum nitride and carbon black; flaky or scaly fillers such as mica, glass flake, sericite, pyrophylite and aluminum flake or graphite; hollow fillers such as shirasu balloon, metal balloons, glass balloon and pumice; and mineral fibers such as glass fiber, carbon fiber, graphite fiber, whisker, metal fibers, silicone carbide fibers, asbestos and wollastonite.

Of these inorganic fillers (4), barium sulfate, calcium silicate and talc are preferred, and talc is particularly preferred in view of mechanical properties, surface appearance of the resulting molded products and heat resistance. While commercially available talcs can be used, those having an average particle size of 1 to 4 μm are particularly preferred. Two or more of these inorganic fillers (4) can be used in combination.

The surface of the inorganic filler (4) is preferably treated with stearic acid, oleic acid, palmitic acid or metal salts thereof, paraffin wax, polyethylene wax or modified products thereof, organic silanes, organic boranes or organic titanates. Such surface treatment facilitates homogeneous dispersion of the inorganic filler in the resin and improves compatibility with the matrix resin.

Further, an inorganic flame retardant such as magnesium hydroxide and aluminum hydroxide; an organic flame retardant such as halogen or phosphorous containing compounds; additives such as a metal powder, an antioxidant, a UV-discoloration preventive, a lubricant, a dispersant, a coupling agent, a foaming agent, a crosslinking agent, a coloring agent and carbon black; an engineering plastic such as other polyolefin resins, aromatic polyesters, polyphenylene ethers, polyamides, polycarbonates, polyoxymethylene and polyphenylene sulfide; and polystyrene, acrylonitrile-butadiene-styrene copolymer (ABS), methyl methacrylate-butadiene-styrene copolymer (MBS) and vinyl resins such as polyvinyl chloride may be added without departing from the spirit of the present invention.

Applications of the present thermoplastic resin composition

The thermoplastic resin composition consisting of the propylene polymeride (1), the multi-phase structure graft copolymer (2) and optionally a thermoplastic elastomer (3) has excellent mechanical properties, molding processability, impact resistance and coatability. Accordingly, such resin composition can be used as a material for various resin molded articles produced by injection molding or extrusion. Resin molded articles can be exemplified by automotive parts such as bumpers, door protectors and mud guards, and electric appliances or building members. The present resin composition is particularly suitably used as a material of automotive bumpers.

Description of Preferred Embodiments

Preparation of the multi-phase structure graft copolymers (Reference Examples 1 to 8), embodiments of the present thermoplastic resin compositions prepared using these multi-phase structure graft copolymers (Examples 1 to 40) and embodiments of prior art thermoplastic resin compositions (Comparative Examples 1 to 10) will now be described below.

Reference Example 1: Preparation of a multi-phase structure graft copolymer (2A)

A 5 liter volume stainless steel autoclave was filled with 2,500 g of a purified water, and then 2.5 g of polyvinyl alcohol as a suspension agent was dissolved therein. To the resulting aqueous solution was added 700 g of an ethylene-propylene copolymer rubber "EPO 7P" (trade name, manufactured by Japan Synthetic Rubber Co., Ltd.), followed by stirring to prepare an aqueous dispersion.

Meanwhile, 1.5 g of benzoyl peroxide-"Nyper B" (trade name, manufactured by Nippon Oil & Fats Co., Ltd.) as the polymerization initiator, 6 g of t-butylperoxymethacryloyloxyethyl carbonate as the radically polymerizable organic peroxide and 30 g of hydroxypropyl methacrylate as the functional group containing unsaturated monomer were dissolved in 300 g of styrene as the vinyl monomer. The resulting mixture was placed into the autoclave and stirred.

The autoclave was heated to 60 to 65°C, and the resulting mixture in the autoclave was stirred for 2 hours to impregnate the ethylene-propylene copolymer rubber with the vinyl monomer containing the polymerization initiator, radically polymerizable organic peroxide and a functional group containing unsaturated monomer. Subsequent ly, the temperature of the autoclave was elevated to 80 to 85°C.

The autoclave was maintained at this temperature for 7 hours to complete polymerization. The product collected from the suspension was then washed with water and dried to give a graft precursor (A). The styrene copolymer, which was extracted from a small amount of the graft precursor (A) with ethyl acetate, proved to have a number-average molecular weight of 900 by gel permeation chromatography (GPC).

The graft precursor (A) was subjected to extrusion treatment using a Laboplastomill (trade mark) single screw extruder (manufactured by Toyo Seiki Seisaku-sho Ltd.) so as to effect graftipg reaction and give a graft copolymer (2A).

Observation of the graft copolymer (2A) using a scanning electron microscope "JEOL JSM T300" (trade name, manufactured by JEOL, Ltd.) identified that the graft copolymer (2A) has a multi-phase structure in which a truly spheric resin phase having an average particle size of 0.3 to 0.4 µm is homogeneously dispersed therein.

The hydroxyl group containing styrene copolymer showed a graft efficiency of 75 %. The term "graft efficiency" used herein means the proportion of the styrene grafted to the ethylene-propylene copolymer rubber of the total amount of the raw material styrene, which can be calculated as follows:

$$\text{(Graft efficiency)}=\text{(Grafted styrene)}/\text{(Total styrene)} \times 100$$

<u>Reference Example 2: Preparation of a multi-phase structure graft copolymer (2B)</u>

A multi-phase structure graft copolymer (2B) was prepared in the same manner as in Reference Example 1, except that 30 g of the hydroxypropyl methacrylate use in Reference Example 1 was replaced by 30 g of methacrylic acid.

In the thus obtained graft copolymer (2B), the carboxyl group containing styrene copolymer had a number-average molecular weight of 900. The resin dispersed in this copolymer (2B) had an average particle size of 0.3 to 0.5 µm.

<u>Reference Example 3: Preparation of a multi-phase structure graft copolymer (2C)</u>

A graft precursor (C) was first prepared in the same manner as in Reference Example 1, except that the hydroxypropyl methacrylate used in Reference Example 1 was omitted. Subsequently 10 g of maleic anhydride was admixed with the graft precursor (C), and the mixture was extruded at 200°C to effect grafting reaction and obtain a multi-phase structure graft copolymer (2C).

In the thus obtained graft copolymer (2C), the carboxyl (acid anhydride) group containing styrene copolymer had a number-average molecular weight of 900. The resin dispersed in this copolymer (2C) had an average particle size of 0.3 to 0.4 µm.

<u>Reference Example 4: Preparation of a multi-phase structure graft copolymer (2D)</u>

A multi-phase structure graft copolymer (2D) was prepared in the same manner as in Reference Example 1, except that the ethylene-propylene copolymer rubber used in Reference Example 1 was replaced by ethylene-glycidyl methacrylate copolymer "Rexpearl RA3150" (trade name, manufactured by Nippon Petrochemicals Co., Ltd.) and that the hydroxypropyl methacrylate was replaced by glycidyl methacrylate.

In the thus obtained graft copolymer (2D), the epoxy group containing styrene copolymer had a number-average molecular weight of 850. The resin dispersed in this copolymer (2D) had an average particle size of 0.3 to 0.4 µm.

<u>Reference Example 5: Preparation of a multi-phase structure graft copolymer (2E)</u>

A multi-phase structure graft copolymer (2E) was prepared in the same manner as in Reference Example 1, except that the ethylene-propylene copolymer rubber used in Reference Example 1 was replaced by ethylene-ethyl acrylate copolymer "Nisseki Rexlon EEA A4200" (trade name, manufactured by Nippon Petrochemicals Co., Ltd.) and that the styrene was replaced by methyl methacrylate.

In the thus obtained graft copolymer (2E), the hydroxyl group containing methyl methacrylate copolymer had a number-average molecular weight of 700. The resin dispersed in this copolymer (2E) had an average particle size of 0.2 to 0.3 µm.

<u>Reference Example 6: Preparation of a multi-phase structure graft copolymer (2F)</u>

A multi-phase structure graft copolymer (2F) was prepared in the same manner as in Reference Example 1, except

that the ethylene-propylene copolymer rubber used in Reference Example 1 was replaced by hydrogenated styrene-butadiene-styrene copolymer rubber "KRATON G1650" (trade mark, manufactured by Shell Kagaku Kabushiki Kaisha).

In the thus obtained graft copolymer (2F), the hydroxyl group containing styrene copolymer had a number-average molecular weight of 950. The resin dispersed in this copolymer (2F) had an average particle size of 0.3 to 0.5 μm.

Reference Example 7: Preparation of a multi-phase structure graft copolymer (2G)

A multi-phase structure graft copolymer (2G) was prepared in the same manner as in Reference Example 1, except that the ethylene-propylene copolymer rubber used in Reference Example 1 was replaced by propylene copolymer "Nisseki Polypro J650G" (trade name, manufactured by Nippon Petrochemicals Co Ltd).

In the thus obtained graft copolymer (2G), the hydroxyl group containing styrene copolymer had a number-average molecular weight of 900. The resin dispersed in this copolymer (2G) had an average particle size of 0.3 to 0.4 μm.

Reference Example 8: Preparation of a multi-phase structure graft copolymer (2H)

A multi-phase structure graft copolymer (2H) having no functional group was prepared in the same manner as in Reference Example 7, except that the hydroxypropyl methacrylate was omitted.

In the thus obtained graft copolymer (2H), the styrene copolymer had a number-average molecular weight of 900. The resin dispersed in this copolymer (2H) had an average particle size of 0.3 to 0.4 μm.

Examples 1 to 10

Examples 1 to 10 shown in Table 1 were prepared by melt kneading the propylene polymeride (1), "Nisseki Polypro J630G" (trade name, manufactured by Nippon Petrochemicals Co., Ltd.) and one multi-phase structure raft copolymer selected from (2A) to (2G) obtained in Reference Examples 1 to 7 at the ratios as shown in Table 1, respectively.

The melt kneading was carried out by extruding the dry blended pellets of raw material resins using a coaxial twin screw extruder having a screw diameter of 30 mm and a cylinder temperature set to 230°C, followed by granulation. The granulated resin was subjected to injection molding to prepare test pieces for various tests. The sizes of the respective test pieces are as follows:

Test piece for Izod impact test:
  13 mm x 65 mm x 6 mm (notched)
Test piece for deflection temperature under load test:
  13 mm x 130 mm x 6 mm
Test piece for coating adhesion test:
  45 mm x 90 mm x 4 mm

The following tests were carried out using the test pieces prepared as described above, and the test results are summarized in Table 1.

(1) Izod impact test

Izod impact test was carried out according to Japan Industrial Standard (JIS) K7110. More specifically, a hammer impact is given to the notched face of a notched test piece supported perpendicularly to measure the level of absorption energy when the test piece was broken by the impact.

The Izod impact strength is indicated by the value obtained by dividing the absorption energy value by the cross sectional area of the notched portion. The thus obtained Izod impact strength can be a measure of the strength of a resin molded articles having flaws. This test was carried out under two different temperature conditions, i.e. at normal temperature and at -40°C, respectively. Resin molded articles generally become brittle at low temperatures. However, automotive molded articles are sometimes exposed to low temperature environments. Therefore, Izod impact test at -40°C is carried out in order to examine the strength of the molded articles at low temperatures.

(2) Deflection temperature under load test

This test was carried out according to JIS K 7207. More specifically, a test piece was put under an oil contained in a tank, and a stress of 18.6 kg/cm$^2$ was applied thereto. The temperature of the oil tank was elevated at a rate of 2.0 ± 0.2°C/min. The deflection temperature under load means the temperature when the test piece underwent a predetermined level of deflection by the heating.

(3) Coating adhesion test

A test piece was coated with a polyolefin primer and then with an acrylic coating. The coating film formed on the test piece was crosscut by eleven each lengthwise and widthwise slits, respectively, at an interval of 1 mm to such a depth that the slits may reach the surface of the base test piece. Thus, 100 squares (1 mm x 1 mm) were formed on the test piece. An adhesive cellophane tape (manufactured by Nichiban Co., Ltd.) was applied to the surface of the crosscut coating film and peeled off speedily. The number of squares which remained unpeeled on the test piece was counted. Namely, the greater the number of the squares remaining on the test piece is, the higher is the adhesion of the test piece.

(4) Petrol resistance

A test piece coated with the same polyolefin primer and acrylic topcoating as used in the coating adhesion test was immersed in gasoline for 30 minutes to observe surface state of the coating film formed on the test piece. Petrol resistance was evaluated depending on the state of the coating film and indicated by o, Δ or X, the meanings of which are as follows:

o: Intact     Δ: Partly peeled     X: Entirely peeled

(5) Appearance

A dummy bumper (length: 460 mm x width: 120 mm x height: 56 mm) was formed by injection molding and examined for flow mark on the surface thereof. Flow mark is the trace formed when a molten resin is poured into a mold Therefore, absence of flow mark means that the molded article has a beautiful appearance, but presence of flow mark means that it has a poor appearance. Flowability of the molten state of resins can be evaluated by observing such flow marks.

[Table 1]

Examples 11 to 20

Examples 11 to 20 shown in Table 2 were prepared by blending a propylene polymeride (1) "Nisseki Polypro J630G" (trade name manufactured by Nippon Petrochemicals Co., Ltd.), one multi-phase structure graft copolymer selected from (2A) to (2C) obtained in Reference Examples 1 to 3 and a thermoplastic elastomer (3) "EPO2P" (trade name, manufactured by Japan Synthetic Rubber Co., Ltd.) at the ratios as shown in Table 2, respectively.

[Table 2]

Examples 21 to 30

Examples 21 to 30 shown in Table 3 were prepared by blending a propylene polymeride (1) "Nisseki Polypro J630G" (trade name, manufactured by Nippon Petrochemicals Co., Ltd.), the graft precursor(A) obtained in Reference Example 1 or one multi-phase structure graft copolymer selected from (2D) to (2G) prepared in Reference Examples 4 to 7, and a thermoplastic elastomer (3) "EPO2P" (trade name, manufactured by Japan Synthetic Rubber Co., Ltd.) at the ratios as shown in Table 3, respectively.

[Table 3]

Examples 31 to 40

Examples 31 to 40 shown in Table 4 were prepared by blending a propylene polymeride (1) "Nisseki Polypro J630G" (trade name, manufactured by Nippon Petrochemicals Co., Ltd.), one multi-phase structure graft copolymer selected from (2A) to (2G) obtained in Reference Examples 1 to 7, a thermoplastic elastomer (3) "EP02P" (trade name, manufactured by Japan Synthetic Rubber Co., Ltd.); and a talc as the inorganic filler (4) at the ratios as shown in Table 4, respectively.

As the talc, "LMS-200" (trade name, manufactured by Fuji Talc Kogyo Co., Ltd.) was used. The amount of the talc shown in Table 4 is indicated in terms of parts by weight per 100 parts by weight of the resin component.

[Table 4]

Comparative Examples 1 to 10

Comparative Example 1 shown in Table 5 contains the propylene polymeride (1) "Nisseki Polypro J630G" (trade name, manufactured by Nippon Petrochemicals Co., Ltd.) only as the resin content. Meanwhile, Comparative Examples 2 to 10 were prepared by blending the same propylene polymeride (1) with one copolymer selected from the group consisting of a multi-phase structure graft copolymer (2H) containing no functional group, a styrene-acrylic acid copolymer (weight ratio: 10/90, number-average molecular weight: 900) and an ethylene-acrylic acid copolymer "Yukalon EEA A-510W" (trade name, manufactured by Mitsubishi Petrochemical Co., Ltd.). Particularly in Comparative Examples 5 to 10, a Ltd.), one multi-phase structure graft copolymer selected from (2A) to (2G) obtained in Reference Examples 1 to 7, a thermoplastic elastomer (3) "EPO2P" (trade name, manufactured by Japan Synthetic Rubber Co., Ltd.); and a talc as the inorganic filler (4) at the ratios as shown in Table 4, respectively.

As the talc, "LMS-200" (trade name, manufactured by Fuji Talc Kogyo Co., Ltd.) was used. The amount of the talc shown in Table 4 is indicated in terms of parts by weight per 100 parts by weight of the resin component.

[Table 4]

(Comparative Examples 1 to 10)

Comparative Example 1 shown in Table 5 contains the propylene polymeride (1) "Nisseki Polypro J630G" (trade name, manufactured by Nippon Petrochemicals Co., Ltd.) only as the resin content. Meanwhile, Comparative Examples 2 to 10 were prepared by blending the same propylene polymeride (1) with one copolymer selected from the group consisting of a multi-phase structure graft copolymer (2H) containing no functional group, a styrene-acrylic acid copolymer (weight ratio: 10/90, number-average molecular weight: 900) and an ethylene-acrylic acid copolymer "Yukalon EEA A-510W" (trade name, manufactured by Mitsubishi Petrochemical Co., Ltd.). Particularly in Comparative Examples 5 to 10, a thermoplastic elastomer (3) "EPO2P" (trade name, manufactured by Japan Synthetic Rubber Co., Ltd.) is additionally employed; and further in Comparative Examples 8 to 10, a talc "LMS-200" (trade name, manufactured by Fuji Talc Kogyo Co., Ltd.) is employed.

[Table 5]

As shown in Tables 1 to 4, Examples 1 to 40 all showed excellent coating adhesion, petrol resistance and appearance. They also showed excellent performances in Izod impact strength (notched) and deflection under load.

As shown in Examples 1 to 3, as the proportion of the multi-phase structure graft copolymer to that of polypropylene increases, Izod impact strength is improved. The reason for the excellent Izod impact strength and coating adhesion exhibited in Examples 1 to 3 is considered to be due to the functional group (hydroxyl group) contained in the vinyl copolymer constituting a part of the multi-phase structure graft copolymer. As the comparison of Examples 11 and 12 with Comparative Examples 13 to 20 shows, Izod impact strength is further improved as the content of thermoplastic elastomer (EPO2P) increases.

On the contrary, in the case of Comparative Example 1 employing polypropylene only, Comparative Examples 2, 5 and 8 employing a multi-phase structure graft copolymer containing no specific functional group and Comparative Examples 3, 4, 6, 7, 9 and 10 employing a mere copolymer but not the graft copolymer, some of the properties such as Izod impact strength, deflection under load, coating adhesion, petrol resistance and appearance are deteriorated.

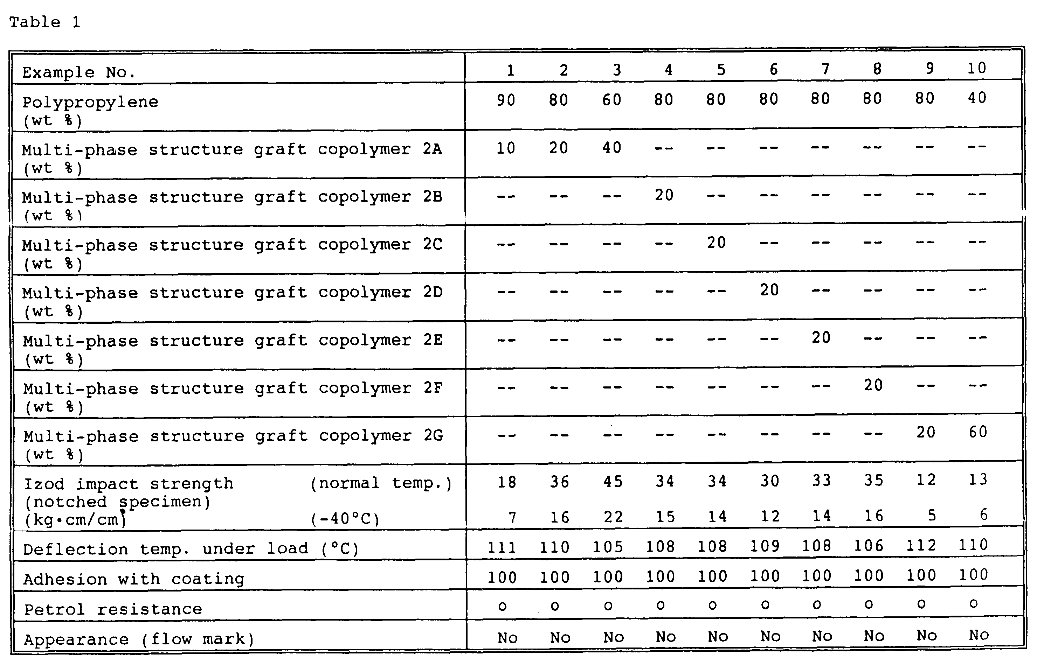

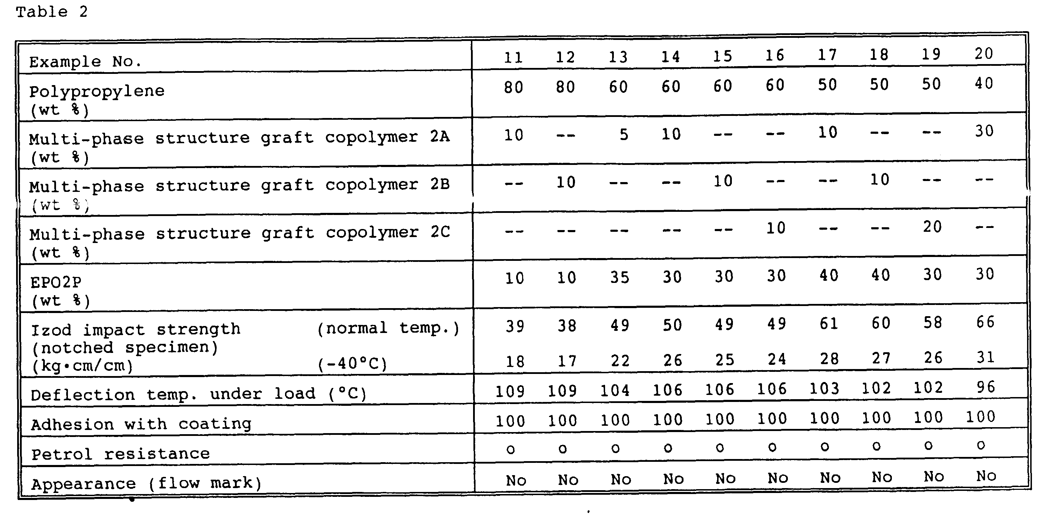

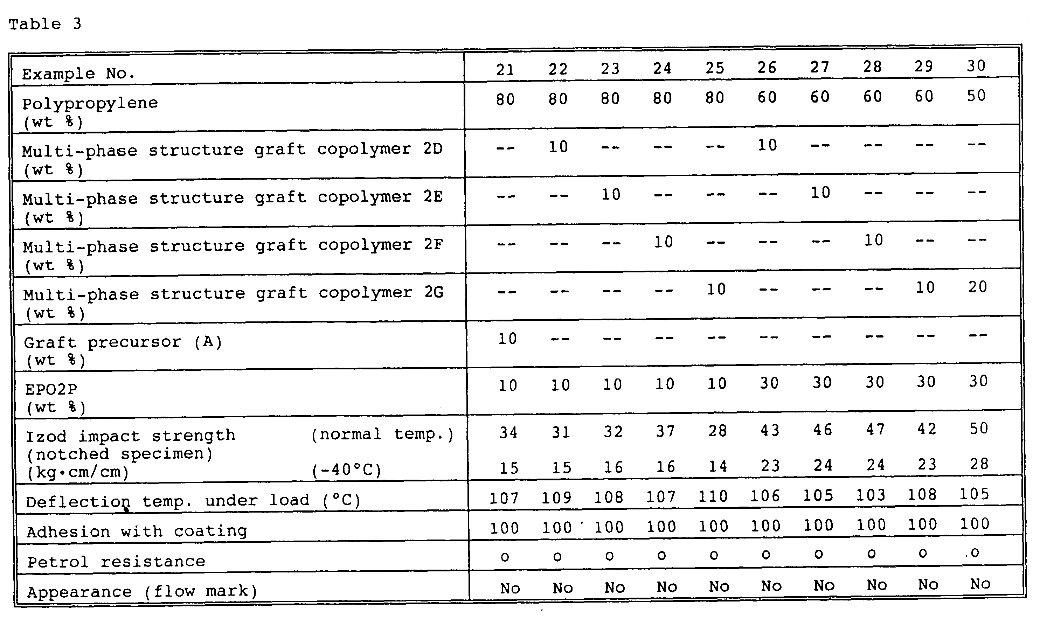

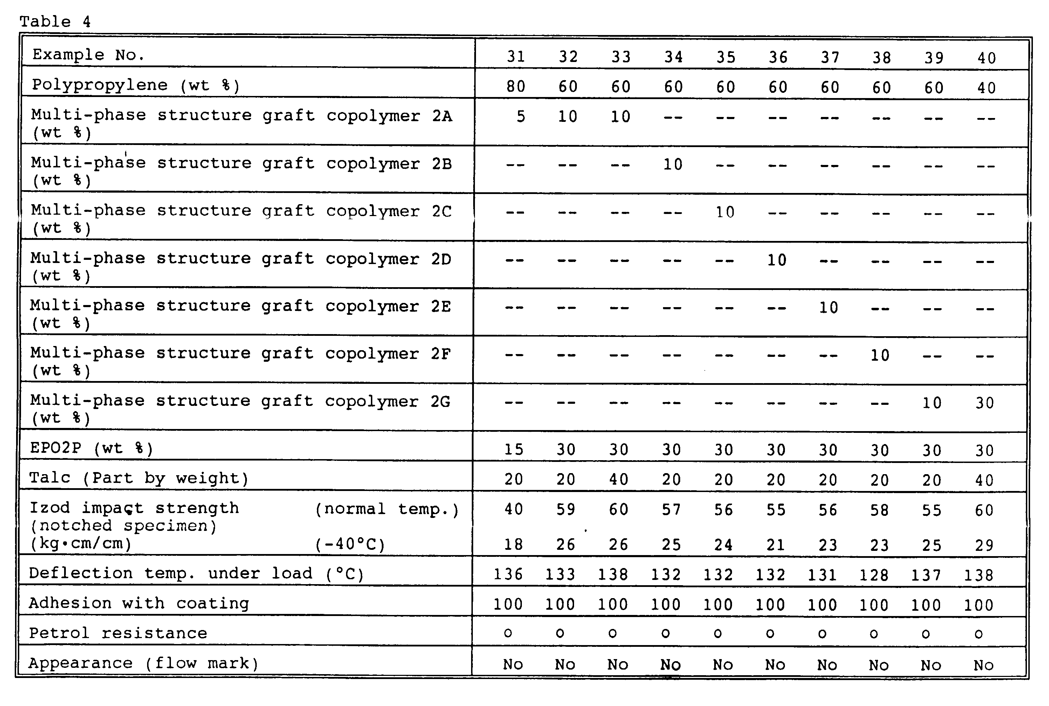

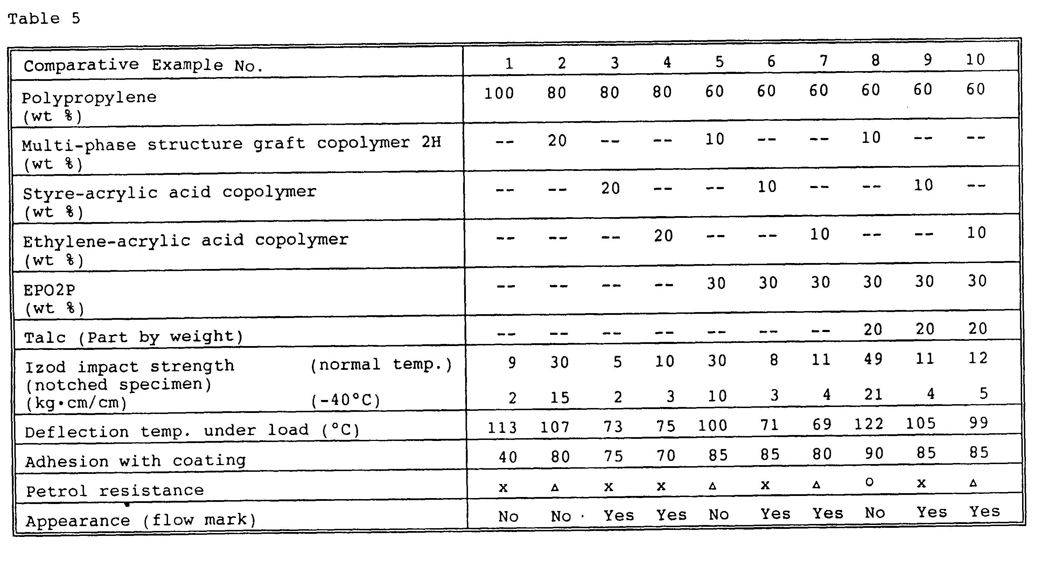

## Claims

**1.** A thermoplastic resin composition which comprises a crystallisable propylene polymeride, and a graft copolymer having an olefin homo/co-polymer portion and a vinyl copolymer portion, <u>characterized</u> <u>in</u> <u>that</u>:

(a) the olefin homo/co-polymer port on constitutes from 5 to 95% by weight of the graft copolymer, the vinyl copolymer portion constituting the remainder of the graft copolymer,

(b) the vinyl copolymer portion is a copolymer of a vinyl monomer with an unsaturated monomer having a functional group selected from an epoxy group, a carboxyl group, a hydroxyl group and an amino group, and

(c) one of the olefin homo-co-polymer portion and the vinyl copolymer portion forms a dispersed phase in the

other with a particle size of 0.001 to 10 μm.

2. A thermoplastic resin composition as claimed in claim 1, wherein the vinyl copolymer portion of the graft copolymer has an average degree of polymerisation in the range of 5 to 10,000.

3. The thermoplastic resin composition as claimed in claim 1 or claim 2, in which the epoxy group containing unsaturated monomer is at least one selected from glycidyl esters including glycidyl acrylate, glycidyl methacrylate, monoglycidyl itaconate, monoglycidyl butenetricarboxylate, diglycidyl butenetricarboxylate, triglycidyl butenetricarboxylate, α-chloroallyl, maleic acid, crotonic acid and fumaric acid; glycidyl ethers including vinyl glycidyl ether, allyl glycidyl ether, glycidyloxyethyl vinyl ether and styrene-p-glycidyl ether; and p-glycidyl styrene.

4. A thermoplastic resin composition as claimed in any one of claims 1 to 3, in which the carboxyl group containing unsaturated monomer is at least one selected from: unsaturated carboxylic acid monomers including acrylic acid, methacrylic acid, maleic acid, fumaric acid and itaconic anhydride; and metal salts thereof.

5. A thermoplastic resin composition as claimed in any one of claims 1 to 4, in which the hydroxyl group containing unsaturated monomer is at least one selected from: 3-hydroxy-1-propene, 4-hydroxy-1-butene, cis-4-hydroxy-2-butene, trans-4-hydroxy-2-butene 3-hydroxy-2-methyl-1-pentene, cis-5-hydroxy-2-pentene, trans-5-hydroxy-2-pentene, cis-1,4-dihydroxy-2-butene, trans-1,4-dihydroxy-2-butene, 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 2-hydroxyethyl crotonate, pentahydroxyethyl acrylate, pentahydroxyethyl methacrylate, 2,3,4,5-tetrahydroxypentyl acrylate and 2,3,4,5-tetrahydroxypentyl methacrylate.

6. A thermoplastic resin composition as claimed in any one of claims 1 to 5, in whoch the amino group containing unsaturated monomer is at least one selected from: alkyl ester derivatives of acrylic acid or methacrylic acid including aminoethyl acrylate, propylaminoethyl acrylate, dimethylaminoethyl methacrylate, aminopropyl methacrylate, phenylaminoethyl methacrylate and cyclohexylaminoethyl methacrylate; vinyl amine derivatives including N-vinyldiethylamine and N-acetylvinylamine; allylamine derivatives including acrylamine, methacrylamine and N-methylallylamine; acrylamine derivatives including acrylamine and N-methylacrylamide; and aminostyrenes including p-aminostyrene.

7. A thermoplastic resin composition as claimed in any one of claims 1 to 6, in which the vinyl monomer is at least one selected from: aromatic vinyl monomers including styrene, methylstyrene, dimethylstyrene, ethylstyrene, isopropylstyrene, chlorostyrene, α-methylstyrene and α-ethylstyrene; $C_1$ - $C_8$ alkyl ester monomers with acrylic acid or methacrylic acid including methyl acrylate, methyl methacrylate, ethyl acrylate and ethyl methacrylate; and acrylonitrile, methacrylonitrile, vinyl acetate, vinyl propionate, vinyl halide, vinylidene halide, vinyl naphthalene, vinyl carbazole, N-phenylmaleimide and N-cyclohexylmaleimide.

8. A thermoplastic resin composition as claimed in any one of claims 1 to 7, which includes an inorganic filler.

9. A thermoplastic resin composition as claimed in claim 1, in which the propylene polymeride comprises at least one of isotactic polypropylene, crystalline propylene-ethylene copolymer, crystalline propylene-ethylene block copolymer, crystalline propylene-butene-1 random copolymer and maleic anhydride modified polypropylene.

10. A thermoplastic resin composition as claimed in any one of claims 1 to 9, which includes a thermoplastic elastomer selected from polybutadiene, styrene-butadiene copolymer, acrylonitrile-butadiene copolymer, polyisoprene, ethylene-α-olefin copolymer, ethylene-α-olefin-polyene copolymer, styrene-butadiene block copolymer, styrene hydride-butadiene block copolymer, styrene hydride-isoprene block copolymer, ethylene-propylene elastomer, styrene graft ethylene-propylene elastomer, ethylene type ionomer resins, ethylene-propylene copolymer rubber and ethylene-propylene-diene copolymer rubber.

11. A method of preparing the graft copolymer of the thermoplastic resin composition as claimed in claim 1 comprising the steps of:

suspending an olefin homo/co-polymer in water;
adding a mixture of a vinyl monomer, an unsaturated monomer containing a functional group selected from: an epoxy group, a carboxyl group, a hydroxyl group and an amino group, a radically polymerizable organic peroxide and a polymerization initiator to said aqueous suspension so as to impregnate the olefin homo/co-polymer with said mixture;
heating the aqueous suspension to effect copolymerization of the vinyl monomer, functional group containing unsaturated monomer and radically polymerizable organic peroxide within the olefin homo/co-polymer, whereby to obtain a graft precursor containing the olefin homo/co-polymer and the functional group containing vinyl copolymer; and
melt kneading the graft precursor collected from the aqueous suspension at 100 to 300°C to give the graft copolymer.

**Patentansprüche**

1. Thermoplastische Harzzusammensetzung, die ein kristallisationsfähiges Propylenpolymerisat und ein Pfropfcopolymer aufweist, das einen Olefin-Homo/Copolymeranteil und einen Vinylcopolymeranteil hat, dadurch gekennzeichnet, daß:

   (a) der Olefin-Homo/Copolymeranteil 5 bis 95 Gew.-% des Pfropfcopolymers bildet und der Vinylcopolymeranteil den Rest des Pfropfcopolymers bildet,
   (b) der Vinylcopolymeranteil ein Copolymer aus einem Vinylmonomer mit einem ungesättigten Monomer ist, das eine funktionelle Gruppe hat, die aus einer Epoxidgruppe, einer Carboxylgruppe, einer Hydroxylgruppe und einer Aminogruppe ausgewählt ist, und
   (c) einer von dem Olefin-Homo/Copolymeranteil und dem Vinylcopolymeranteil in dem jeweils anderen eine disperse Phase mit einer Teilchengröße von 0,001 bis 10 µm bildet.

2. Thermoplastische Harzzusammensetzung nach Anspruch 1, wobei der Vinylcopolymeranteil des Pfropfcopolymeren einen mittleren Polymerisationsgrad im Bereich von 5 bis 10.000 hat.

3. Thermoplastische Harzzusammensetzung nach Anspruch 1 oder 2, wobei das die Epoxidgruppe enthaltende ungesättigte Monomer wenigstens eines ist, das ausgewählt ist aus: Glycidylester, die Glycidylacrylat, Glycidylmethacrylat, Monoglycidylitaconat, Monoglycidylbutentricarboxylat, Diglycidylbutentricarboxylat, Triglycidylbutentricarboxylat, α-Chlorallyl, Maleinsäure, Crotonsäure und Fumarsäure aufweisen; Glycidylethern, die Vinylglycidylether-, Allylglycidylether, Glycidyloxyethylvinylether und Styrol-p-glycidylether aufweisen; und p-Glycidylstyrol.

4. Thermoplastische Harzzusammensetzung nach einem der Ansprüche 1 bis 3, wobei das die Carboxylgruppe enthaltende ungesättigte Monomer wenigstens eines ist, das ausgewählt ist aus: ungesättigten Carbonsäuremonomeren, die Acrylsäure, Methacrylsäure, Maleinsäure, Fumarsäure und Itaconsäureanhydrid aufweisen; und Metallsalzen davon.

5. Thermoplastische Harzzusammensetzung nach einem der Ansprüche 1 bis 4, wobei das die Hydroxylgruppe enthaltende ungesättigte Monomer wenigstens eines ist, das ausgewählt ist aus: 3-Hydroxy-1-propen, 4-Hydroxy-1-buten, cis-4-Hydroxy-2-buten, trans-4-Hydroxy-2-buten, 3-Hydroxy-2-methyl-1-penten, cis-5-Hydroxy-2-penten, trans-5-Hydroxy-2-penten, cis-1,4-Dihydroxy-2-buten, trans-1,4-Dihydroxy-2-buten, 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 2-Hydroxyethylorotonat, Pentahydroxyethylacrylat, Pentahydroxyethylmethacrylat, 2,3,4,5-Tetrahydroxypentylacrylat und 2,3,4,5-Tetrahydroxypentylmethacrylat.

6. Thermoplastische Harzzusammensetzung nach einem der Ansprüche 1 bis 5, wobei das die Aminogruppe enthaltende ungesättigte Monomer wenigstens eines ist, das ausgewählt ist aus: Alkylesterderivaten von Acrylsäure oder Methacrylsäure, die Aminoethylacrylat, Propylaminoethylacrylat, Dimethylaminoethylmethacrylat, Aminopropylmethacrylat, Phenylaminoethylmethacrylat und Cyclohexylaminoethylmethacrylat aufweisen; Vinylaminderivaten, die N-Vinyldiethylamin und N-Acetylvinylamin aufweisen; Allylaminderivaten, die Acrylamin, Methacrylamin und N-Methylallylamin aufweisen; Acrylaminderivaten, die Acrylamin und N-Methylacrylamid aufweisen; und Aminostyrolen, die p-Aminostyrol aufweisen.

7. Thermoplastische Harzzusammensetzung nach einem der Ansprüche 1 bis 6, wobei das Vinylmonomer wenigstens eines ist, das ausgewählt ist aus: aromatischen Vinylmonomeren, die Styrol, Methylstyrol, Dimethylstyrol, Ethylstyrol, Isopropylstyrol, Chlorstyrol, α-Methylstyrol und α-Ethylstyrol aufweisen; $C_1$-$C_8$-Alkylestermonomeren mit Acylsäure oder Methacrylsäure, die Methylacrylat, Methylmethacrylat, Ethylacrylat und Ethylmethacrylat aufweisen; und Acrylnitril, Methacrylnitril, Vinylacetat, Vinylpropionat, Vinylhalogenid, Vinylidenhalogenid, Vinylnaphthalin, Vinylcarbazol, N-Phenylmaleinimid und N-Cyclohexylmaleinimid.

**8.** Thermoplastische Harzzusammensetzung nach einem der Ansprüche 1 bis 7, die einen anorganischen Füllstoff enthält.

**9.** Thermoplastische Harzzusammensetzung rach Anspruch 1, wobei das Propylenpolymerisat wenigstens eines von isotaktischem Polypropylen, kristallinem Propylen-Ethylen-Copolymer, kristallinem Propylen-Ethylen-Blockcopolymer, kristallinem statistischen Propylen-Buten-1-Copolymer und Maleinsäureanhydrid-modifiziertem Polypropylen aufweist.

**10.** Thermoplastische Harzzusammensetzung nach einem der Ansprüche 1 bis 9, die ein thermoplastisches Elastomer aufweist, das ausgewählt ist aus: Polybutadien, Styrol-Butadien-Copolymer, Acrylnitril-Butadien-Copolymer, Polyisopren, Ethylen-α-Olefin-Copolymer, Ethylen-α-Olefin-Polyen-Copolymer, Styrol-Butadien-Blockcopolymer, Styrolhydrid-Butadien-Blockcopolymer, Styrolhydrid-Isopren-Blockcopolymer, Ethylen-Propylen-Elastomer, Styrol-Ethylen-Propylen-Pfropfelastomer, Ionomerharze vom Ethylentyp, Ethylen-Propylen-Copolymerkautschuk und Ethylen-Propylen-Dien-Copolymerkautschuk.

**11.** Verfahren zum Herstellen des Pfropfcopolymers der thermoplastischen Harzzusammensetzung nach Anspruch 1, das die folgenden Schritte aufweist:

Suspendieren eines Olefin-Homo/Copolymers in Wasser;
Zufügen eines Gemischs aus einem Vinylmonomer, einem ungesättigten Monomer, das eine funktionelle Gruppe enthält, die aus einer Epoxidgruppe, einer Carboxylgruppe, einer Hydroxylgruppe und einer Aminogruppe ausgewählt ist, einem radikalisch polymerisierbaren organischen Peroxid und einem Polymerisationsstarter zu der wäßrigen Suspension, um das Olefin-Homo/Copolymer mit dem Gemisch zu imprägnieren;
Erwärmen der wäßrigen Suspension, um die Copolymerisation des Vinylmonomers, des eine funktionelle Gruppe enthaltenden ungesättigten Monomers und des radikalisch polymerisierbaren organischen Peroxids in dem olefin-Homo/Copolymer zu bewirken, so daß ein Pfropfvorprodukt erhalten wird, das das Olefin-Homo/Copolymer und das die funktionelle Gruppe enthaltende Vinylcopolymer enthält; und
Schmelzkneten des aus der wäßrigen Suspension gesammelten Pfropfvorprodukts bei 100 bis 300 °C, um das Pfropfcopolymer zu ergeben.

**Revendications**

**1.** Composition de résine thermoplastique qui comprend un polymère de propylène cristallisable et un copolymère greffé ayant une partie homo/co-polymérique à base d'oléfine et une partie copolymérique à base de vinyle, caractérisée en ce que :

(a) la partie homo/co-polymérique à base d'oléfine constitue de 5 à 95% en poids du copolymère greffé, la partie copolymérique à base de vinyle constituant le reste du copolymère greffé,
(b) la partie copolymérique à base de vinyle est un copolymère d'un monomère de vinyle et d'un monomère insaturé ayant un groupe fonctionnel choisi parmi les groupes époxyde, carboxyle, hydroxyle et amino, et
(c) l'une des deux parties homo/co-polymérique à base d'oléfine et copolymérique à base de vinyle forme une phase dispersée dans l'autre avec une granulométrie de 0,001 à 10 μm.

**2.** Composition de résine thermoplastique selon la revendication 1, dans laquelle la partie copolymérique à base de vinyle du copolymère greffé présente un degré moyen de polymérisation compris dans la gamme de 5 à 10.000.

**3.** Composition de résine thermoplastique selon la revendication 1 ou la revendication 2, dans laquelle le monomère insaturé contenant un groupe époxyde est au moins un membre choisi parmi le groupe constitué de: esters de glycidyle, comprenant l'acrylate de glycidyle, le méthacrylate de glycidyle, l'itaconate de monoglycidyle, le butène-tricarboxylate de monoglycidyle, le butène-tricarboxylate de diglycidyle, le butène-tricarboxylate de triglycidyle, le α-chloro-allyle, l'acide maléique, l'acide crotonique, et l'acide fumarique ; éthers de glycidyle comprenant l'éther de vinyle glycidyle, l'éther d'allyle glycidyle, l'éther de glycidyloxyéthyl vinyle, l'éther de styrène-p-glycidyle; et p-glycidyle styrène.

**4.** Composition de résine thermoplastique selon l'une des revendications 1 à 3, dans laquelle le monomère insaturé

contenant un groupe carboxyle est au moins un membre choisi parmi le groupe constitué de : monomères d'acide carboxylique insaturé comprenant l'acide acrylique, l'acide méthacrylique, l'acide maléique, l'acide fumarique et l'anhydride itaconique; et de sels métalliques de ces composés.

5. Composition de résine thermoplastique selon l'une des revendications 1 à 4, dans laquelle le monomère insaturé contenant un groupe hydroxyle est au moins un membre choisi parmi le groupe constitué de : 3-hydroxy-1-propène, 4-hydroxy-1-butène, cis-4-hydroxy-2-butène, trans-4-hydroxy-2-butène, 3-hydroxy-2-méthyl-1-pentène, cis-5-hydroxy-2-pentène, trans-5-hydroxy-2-pentène, cis-1,4-dihydroxy-2-butène, trans-1,4-dihydroxy-2-butène, acrylate de 2-hydroxyéthyle, méthacrylate de 2-hydroxyéthyle, acrylate de 2-hydroxypropyle, méthacrylate de 2-hydroxypropyle, acrylate de 3-hydroxypropyle, méthacrylate de 3-hydroxypropyle, crotonate de 2-hydroxyéthyle, acrylate de pentahydroxyéthyle, méthacrylate de pentahydroxyéthyle, acrylate de 2,3,4,5-tétrahydroxypentyle et méthacrylate de 2,3,4,5-tétrahydroxypentyle.

6. Composition de résine thermoplastique selon l'une des revendications 1 à 5, dans laquelle le monomère insaturé contenant un groupe amino est au moins un membre choisi parmi le groupe constitué de : dérivés esters d'alcoyle de l'acide acrylique ou de l'acide méthacrylique comprenant l'acrylate d'aminoéthyle, l'acrylate de propylaminoéthyle, le méthacrylate de diméthylaminoéthyle, le méthacrylate d'aminopropyle, le méthacrylate de phénylaminoéthyle, et le méthacrylate de cyclohexylaminoéthyle ; dérivés vinyle amine comprenant la N-vinyldiéthylamine et la N-acétylvinylamine ; dérivés allylamine comprenant l'acrylamine, la méthacrylamine, et la N-méthylallylamine ; dérivés acrylamine comprenant l'acrylamine et le N-méthylacrylamide ; et aminostyrènes comprenant le p-aminostyrène.

7. Composition de résine thermoplastique selon l'une des revendications 1 à 6, dans laquelle le monomère de vinyle est au moins un membre choisi parmi le groupe constitué de : monomères de vinyle aromatique comprenant le styrène, le méthylstyrène, le diméthylstyrène, l'éthylstyrène, l'isopropylstyrène, le chlorostyrène, l'$\alpha$-méthylstyrène et l'$\alpha$-éthylstyrène ; monomères d'esters d'alcoyles en $C_1$ à $C_8$ de l'acide acrylique ou de l'acide méthacrylique, comprenant l'acrylate de méthyle, le méthacrylate de méthyle, l'acrylate d'éthyle et le méthacrylate d'éthyle et acrylonitrile, méthacrylonitrile, acétate de vinyle, propionate de vinyle, halogénure de vinyle, halogénure de vinylidène, vinyle naphtalène, vinyle carbazole, N-phénylmaléimide et N-cyclohexylmaléimide.

8. Composition de résine thermoplastique selon l'une des revendications 1 à 7, qui comprend une charge inorganique.

9. Composition de résine thermoplastique selon la revendication 1, dans laquelle le polymère de propylène comprend au moins un membre du groupe constitué de : polypropylène isotactique, copolymère cristallin de propylène et d'éthylène, copolymère séquencé cristallin de propylène et d'éthylène, copolymère aléatoire cristallin de propylène et de butène-1 et polypropylène modifié par l'anhydride maléique.

10. Composition de résine thermoplastique selon l'une des revendications 1 à 9, qui comprend un élastomère thermoplastique choisi parmi le groupe constitué de : polybutadiène, copolymère de styrène et de butadiène, copolymère d'acrylonitrile et de butadiène, polyisoprène, copolymère d'éthylène et d'une $\alpha$-oléfine, copolymère d'éthylène, d'une $\alpha$-oléfine et d'un polyène, copolymère séquencé de styrène et de butadiène, copolymère séquencé d'hydrure de styrène et de butadiène, copolymère séquencé d'hydrure de styrène et d'isoprène, élastomère d'éthylène et de propylène, élastomère d'éthylène et de propylène greffé de styrène, résines ionomériques de type éthylène, caoutchouc copolymérique d'éthylène et de propylène et caoutchouc copolymérique d'éthylène, de propylène et de diène.

11. Méthode de préparation du copolymère greffé de la composition de résine thermoplastique selon la revendication 1 comprenant les étapes :

de mise en suspension d'un homo/co-polymère à base d'oléfine dans l'eau ;
d'addition d'un mélange d'un monomère de vinyle, d'un monomère insaturé contenant un groupe fonctionnel choisi parmi les groupes époxyde, carboxyle, hydroxyle et amino, d'un peroxyde organique polymérisable par voie radicalaire et d'un inducteur de polymérisation à ladite suspension aqueuse de manière à imprégner l'homo/co-polymère à base d'oléfine dudit mélange ;
de chauffage de la suspension aqueuse afin de produire la copolymérisation du monomère de vinyle, du monomère insaturé contenant le groupe fonctionnel et du peroxyde organique polymérisable par voie radicalaire dans l'homo/co-polymère à base d'oléfine, afin d'obtenir ainsi un précurseur greffé contenant l'homo/copolymère à base d'oléfine et le copolymère à base de vinyle contenant le groupe fonctionnel ;

de malaxage en fusion du précurseur greffé extrait de la suspension aqueuse à une température comprise entre 100 et 300°C pour donner le copolymère greffé.

Table 1

| Example No. | 1 | 2 | 3 | 4 | 5 | 6 | 7 | 8 | 9 | 10 |
|---|---|---|---|---|---|---|---|---|---|---|
| Polypropylene (wt %) | 90 | 80 | 60 | 80 | 80 | 80 | 80 | 80 | 80 | 40 |
| Multi-phase structure graft copolymer 2A (wt %) | 10 | 20 | 40 | -- | -- | -- | -- | -- | -- | -- |
| Multi-phase structure graft copolymer 2B (wt %) | -- | -- | -- | 20 | -- | -- | -- | -- | -- | -- |
| Multi-phase structure graft copolymer 2C (wt %) | -- | -- | -- | -- | 20 | -- | -- | -- | -- | -- |
| Multi-phase structure graft copolymer 2D (wt %) | -- | -- | -- | -- | -- | 20 | -- | -- | -- | -- |
| Multi-phase structure graft copolymer 2E (wt %) | -- | -- | -- | -- | -- | -- | 20 | -- | -- | -- |
| Multi-phase structure graft copolymer 2F (wt %) | -- | -- | -- | -- | -- | -- | -- | 20 | -- | -- |
| Multi-phase structure graft copolymer 2G (wt %) | -- | -- | -- | -- | -- | -- | -- | -- | 20 | 60 |
| Izod impact strength (notched specimen) (kg•cm/cm) (normal temp.) | 18 | 36 | 45 | 34 | 34 | 30 | 33 | 35 | 12 | 13 |
| (-40°C) | 7 | 16 | 22 | 15 | 14 | 12 | 14 | 16 | 5 | 6 |
| Deflection temp. under load (°C) | 111 | 110 | 105 | 108 | 108 | 109 | 108 | 106 | 112 | 110 |
| Adhesion with coating | 100 | 100 | 100 | 100 | 100 | 100 | 100 | 100 | 100 | 100 |
| Petrol resistance | o | o | o | o | o | o | o | o | o | o |
| Appearance (flow mark) | No | No | No | No | No | No | No | No | No | No |

Table 2

| Example No. | 11 | 12 | 13 | 14 | 15 | 16 | 17 | 18 | 19 | 20 |
|---|---|---|---|---|---|---|---|---|---|---|
| Polypropylene (wt %) | 80 | 80 | 60 | 60 | 60 | 60 | 50 | 50 | 50 | 40 |
| Multi-phase structure graft copolymer 2A (wt %) | 10 | -- | 5 | 10 | -- | -- | 10 | -- | -- | 30 |
| Multi-phase structure graft copolymer 2B (wt %) | -- | 10 | -- | -- | 10 | -- | -- | 10 | -- | -- |
| Multi-phase structure graft copolymer 2C (wt %) | -- | -- | -- | -- | -- | 10 | -- | -- | 20 | -- |
| EPO2P (wt %) | 10 | 10 | 35 | 30 | 30 | 30 | 40 | 40 | 30 | 30 |
| Izod impact strength (notched specimen) (kg•cm/cm) (normal temp.) | 39 | 38 | 49 | 50 | 49 | 49 | 61 | 60 | 58 | 66 |
| Izod impact strength (notched specimen) (kg•cm/cm) (-40°C) | 18 | 17 | 22 | 26 | 25 | 24 | 28 | 27 | 26 | 31 |
| Deflection temp. under load (°C) | 109 | 109 | 104 | 106 | 106 | 106 | 103 | 102 | 102 | 96 |
| Adhesion with coating | 100 | 100 | 100 | 100 | 100 | 100 | 100 | 100 | 100 | 100 |
| Petrol resistance | o | o | o | o | o | o | o | o | o | o |
| Appearance (flow mark) | No | No | No | No | No | No | No | No | No | No |

Table 3

| Example No. | 21 | 22 | 23 | 24 | 25 | 26 | 27 | 28 | 29 | 30 |
|---|---|---|---|---|---|---|---|---|---|---|
| Polypropylene (wt %) | 80 | 80 | 80 | 80 | 80 | 60 | 60 | 60 | 60 | 50 |
| Multi-phase structure graft copolymer 2D (wt %) | -- | 10 | -- | -- | -- | 10 | -- | -- | -- | -- |
| Multi-phase structure graft copolymer 2E (wt %) | -- | -- | 10 | -- | -- | -- | 10 | -- | -- | -- |
| Multi-phase structure graft copolymer 2F (wt %) | -- | -- | -- | 10 | -- | -- | -- | 10 | -- | -- |
| Multi-phase structure graft copolymer 2G (wt %) | -- | -- | -- | -- | 10 | -- | -- | -- | 10 | 20 |
| Graft precursor (A) (wt %) | 10 | -- | -- | -- | -- | -- | -- | -- | -- | -- |
| EPO2P (wt %) | 10 | 10 | 10 | 10 | 10 | 30 | 30 | 30 | 30 | 30 |
| Izod impact strength (notched specimen) (kg•cm/cm) (normal temp.) | 34 | 31 | 32 | 37 | 28 | 43 | 46 | 47 | 42 | 50 |
| Izod impact strength (notched specimen) (kg•cm/cm) (-40°C) | 15 | 15 | 16 | 16 | 14 | 23 | 24 | 24 | 23 | 28 |
| Deflection temp. under load (°C) | 107 | 109 | 108 | 107 | 110 | 106 | 105 | 103 | 108 | 105 |
| Adhesion with coating | 100 | 100 | 100 | 100 | 100 | 100 | 100 | 100 | 100 | 100 |
| Petrol resistance | o | o | o | o | o | o | o | o | o | o |
| Appearance (flow mark) | No | No | No | No | No | No | No | No | No | No |

Table 4

| Example No. | 31 | 32 | 33 | 34 | 35 | 36 | 37 | 38 | 39 | 40 |
|---|---|---|---|---|---|---|---|---|---|---|
| Polypropylene (wt %) | 80 | 60 | 60 | 60 | 60 | 60 | 60 | 60 | 60 | 40 |
| Multi-phase structure graft copolymer 2A (wt %) | 5 | 10 | 10 | -- | -- | -- | -- | -- | -- | -- |
| Multi-phase structure graft copolymer 2B (wt %) | -- | -- | -- | 10 | -- | -- | -- | -- | -- | -- |
| Multi-phase structure graft copolymer 2C (wt %) | -- | -- | -- | -- | 10 | -- | -- | -- | -- | -- |
| Multi-phase structure graft copolymer 2D (wt %) | -- | -- | -- | -- | -- | 10 | -- | -- | -- | -- |
| Multi-phase structure graft copolymer 2E (wt %) | -- | -- | -- | -- | -- | -- | 10 | -- | -- | -- |
| Multi-phase structure graft copolymer 2F (wt %) | -- | -- | -- | -- | -- | -- | -- | 10 | -- | -- |
| Multi-phase structure graft copolymer 2G (wt %) | -- | -- | -- | -- | -- | -- | -- | -- | 10 | 30 |
| EPO2P (wt %) | 15 | 30 | 30 | 30 | 30 | 30 | 30 | 30 | 30 | 30 |
| Talc (Part by weight) | 20 | 20 | 40 | 20 | 20 | 20 | 20 | 20 | 20 | 40 |
| Izod impact strength (notched specimen) (kg·cm/cm) (normal temp.) | 40 | 59 | 60 | 57 | 56 | 55 | 56 | 58 | 55 | 60 |
| Izod impact strength (notched specimen) (kg·cm/cm) (-40°C) | 18 | 26 | 26 | 25 | 24 | 21 | 23 | 23 | 25 | 29 |
| Deflection temp. under load (°C) | 136 | 133 | 138 | 132 | 132 | 132 | 131 | 128 | 137 | 138 |
| Adhesion with coating | 100 | 100 | 100 | 100 | 100 | 100 | 100 | 100 | 100 | 100 |
| Petrol resistance | o | o | o | o | o | o | o | o | o | o |
| Appearance (flow mark) | No | No | No | No | No | No | No | No | No | No |

Table 5

| Comparative Example No. | 1 | 2 | 3 | 4 | 5 | 6 | 7 | 8 | 9 | 10 |
|---|---|---|---|---|---|---|---|---|---|---|
| Polypropylene (wt %) | 100 | 80 | 80 | 80 | 60 | 60 | 60 | 60 | 60 | 60 |
| Multi-phase structure graft copolymer 2H (wt %) | -- | 20 | -- | -- | 10 | -- | -- | 10 | -- | -- |
| Styre-acrylic acid copolymer (wt %) | -- | -- | 20 | -- | -- | 10 | -- | -- | 10 | -- |
| Ethylene-acrylic acid copolymer (wt %) | -- | -- | -- | 20 | -- | -- | 10 | -- | -- | 10 |
| EPO2P (wt %) | -- | -- | -- | -- | 30 | 30 | 30 | 30 | 30 | 30 |
| Talc (Part by weight) | -- | -- | -- | -- | -- | -- | -- | 20 | 20 | 20 |
| Izod impact strength (notched specimen) (kg•cm/cm) (normal temp.) | 9 | 30 | 5 | 10 | 30 | 8 | 11 | 49 | 11 | 12 |
| Izod impact strength (notched specimen) (kg•cm/cm) (-40°C) | 2 | 15 | 2 | 3 | 10 | 3 | 4 | 21 | 4 | 5 |
| Deflection temp. under load (°C) | 113 | 107 | 73 | 75 | 100 | 71 | 69 | 122 | 105 | 99 |
| Adhesion with coating | 40 | 80 | 75 | 70 | 85 | 85 | 80 | 90 | 85 | 85 |
| Petrol resistance | x | Δ | x | x | Δ | x | Δ | ○ | x | Δ |
| Appearance (flow mark) | No | No | Yes | Yes | No | Yes | Yes | No | Yes | Yes |